# DEMANDE DE BREVET EUROPEEN

(11) **EP 3 550 866 A1**
(43) Date de publication de la demande: **09.10.2019**
(21) Numéro de dépôt: 19167057.9
(22) Date de dépôt: 03.04.2019
(51) Int. Cl.: H04W 8/18, H04W 48/18, H04L 12/24

(54) **PROCÉDÉ DE GESTION DES ACCÈS À UNE INFRASTRUCTURE DE COMMUNICATION AVEC UN OPÉRATEUR DE RÉSEAU MOBILE PRIVILÉGIÉ ET DISPOSITIFS ASSOCIÉS**

(30) Priorité: 04.04.2018 FR 1800276
(71) Demandeur: Thales, 92400 Courbevoie (FR)
(72) Inventeur: BITTARD, Anne, 92622 GENNEVILLIERS (FR); BLONDEZ, Jérome, 59832 LAMBERSART (FR)
(74) Mandataire: Lavoix

(57) **Abrégé**

L'invention concerne un procédé de gestion des accès à une infrastructure de télécommunication (10) comprenant des réseaux (12_{A}, 12_{B}) appartenant à des opérateurs de réseau mobile dont un opérateur privilégié,
le procédé comportant les étapes de :
- tentative d'attachement d'un terminal mobile (14) à un réseau (12_{A}, 12_{B}), dit réseau courant et appartenant à un opérateur courant,
- prise de décision de s'attacher à un autre réseau (12_{A}, 12_{B}), dit réseau cible, le réseau cible appartenant à un opérateur distinct de l'opérateur courant, la prise de décision étant basée sur:
- un premier critère selon lequel l'opérateur courant est distinct de l'opérateur privilégié, et
- un deuxième critère selon lequel la qualité des services fournis par le réseau courant est insuffisante, et

- initiation de l'attachement au réseau cible.

## Description

La présente invention concerne un procédé de gestion des accès à une infrastructure de communication. La présente invention se rapporte également à un produit programme d'ordinateur, un support lisible d'informations et une infrastructure de communication associés.

Pour l'ensemble des sigles dans la description qui suit, le lecteur est invité à se reporter à la partie LEXIQUE.

Pour accéder à des services de téléphonie mobile, tels des appels mobiles, l'échange de messages ou l'accès à Internet, un utilisateur utilise un terminal mobile dans laquelle est installé un dispositif d'attachement, comprenant généralement une carte SIM fournie par le MNO de l'utilisateur, pour accéder au réseau dudit MNO.

Toutefois, il existe des situations dans lesquelles l'utilisation de certains services de téléphonie mobile est dégradée, voire impossible. L'utilisateur n'est, par exemple, plus en mesure d'accéder à Internet, ou ne dispose pas d'un débit suffisant pour réaliser une visio-conférence.

De telles situations résultent souvent de la perte ou de la dégradation de la couverture radio du réseau du MNO causée, par exemple, par un défaut technique dudit réseau, ou par un maillage territorial incomplet de la couverture radio dudit MNO.

Afin de répondre à ce besoin, des solutions permettant à des téléphones de basculer sans intervention de l'utilisateur d'un réseau à un autre sont connues. Le basculement est alors commandé sur la base de critères mesurés par le téléphone tels que la présence ou non d'un réseau disponible, la qualité de la connexion à chaque réseau, ou encore la date et l'heure.

Cependant d'autres critères qui ne sont pas immédiatement contrôlables par le téléphone sont susceptibles d'influer sur la qualité globale du service offert par un réseau. Par exemple, l'opérateur de services peut, pour certains types d'utilisateurs, avoir négocié un accès prioritaire à un réseau spécifique pour leurs téléphones, qui bénéficient alors par rapport à d'autres téléphones d'avantages tels qu'une garantie de connexion au réseau en cas d'affluence. Dans d'autres cas, un réseau spécifique, bien que pouvant offrir à un instant donné une qualité de connexion inférieure à un autre réseau disponible à un endroit particulier, offre une meilleure connexion dans des zones géographiques particulières, et offre globalement une meilleure garantie d'accès aux services de communication.

En outre, l'opérateur de services est également susceptible de bénéficier de tarifs de gros réduits auprès d'un MNO spécifique.

Il existe donc un besoin de disposer d'un procédé de gestion des accès à une infrastructure de communication fournissant une bonne résilience à des services mobiles et prenant également en compte des critères non mesurables par un téléphone mobile.

A cet effet, il est proposé un procédé de gestion des accès à une infrastructure de télécommunication. L'infrastructure de télécommunication comprend des réseaux de télécommunication, les réseaux de télécommunication étant propres à fournir des services, les réseaux appartenant à des opérateurs de réseau mobile, un des opérateurs de réseau mobile étant un opérateur de réseau mobile privilégié et un terminal mobile propre à s'attacher aux réseaux. Le procédé comporte les étapes de tentative d'attachement du terminal mobile à un réseau, dit réseau courant et appartenant à un opérateur de réseau mobile courant et prise de décision de s'attacher à un autre réseau, dit réseau cible, le réseau cible appartenant à un opérateur de réseau mobile cible distinct de l'opérateur de réseau mobile courant. La prise de décision est basée sur l'un des deux critères suivants : un premier critère selon lequel l'opérateur de réseau mobile courant est distinct de l'opérateur de réseau mobile privilégié, et un deuxième critère selon lequel la qualité des services fournis par le réseau courant est insuffisante. Le procédé comporte aussi une étape d'initiation de l'attachement au réseau cible.

Suivant des modes de réalisation particuliers, le procédé de gestion comprend une ou plusieurs des caractéristiques suivantes, prise(s) isolément ou suivant toutes les combinaisons techniquement possibles :
- le terminal mobile comporte un dispositif d'attachement contenant un module d'attachement, l'étape de prise de décision étant mise en oeuvre par un module de décision distinct du module d'attachement et la mise en oeuvre de l'étape d'initiation d'un attachement étant déclenchée par le module d'attachement sur commande du module de décision, le module de décision étant mémorisé dans une mémoire du terminal mobile et le module d'attachement étant mémorisé dans une mémoire du dispositif d'attachement.
- l'infrastructure de télécommunication comporte un dispositif de gestion et les critères mis en oeuvre par le module de décision sont paramétrables par le dispositif de gestion, le dispositif de gestion communiquant avec le module de décision, la communication pouvant être asynchrone, le dispositif de gestion et le module de décision étant administrés par l'opérateur de services et fonctionnant indépendamment des opérateurs de réseau de télécommunication.
- le dispositif d'attachement mémorise un réseau, le procédé comporte, en outre, les étapes de démarrage du terminal mobile, de lecture du réseau mémorisé dans le dispositif d'attachement, si le réseau mémorisé est distinct de celui de l'opérateur de réseau mobile privilégié, de transmission, depuis le module de décision vers le module d'attachement, d'un message de bascule comprenant une information d'identification du réseau cible, le module d'attachement étant propre à déclencher la mise en oeuvre de l'initiation d'un attachement du terminal mobile au réseau cible à la réception dudit message de bascule et de tentative d'attachement au réseau privilégié.
- le procédé comporte une étape de test du premier critère et du deuxième critère à une fréquence prédéfinie.
- le procédé comporte, en outre, une étape d'information à l'utilisateur du terminal mobile de l'existence d'un opérateur de réseau mobile privilégié, et une étape d'avertissement à l'utilisateur du terminal mobile de l'utilisation de l'opérateur de réseau mobile privilégié ou d'un autre réseau mobile.

Il est également proposé un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en oeuvre d'un procédé tel que défini précédemment lorsque le programme d'ordinateur est mis en oeuvre sur l'unité de traitement des données.

Il est, en outre, proposé un support lisible d'informations sur lequel est mémorisé un programme d'ordinateur comprenant des instructions de programme, le programme d'ordinateur étant chargeable sur une unité de traitement de données et adapté pour entraîner la mise en oeuvre d'un procédé tel que défini précédemment lorsque le programme d'ordinateur est mis en oeuvre sur l'unité de traitement des données.

Il est également proposé une infrastructure de télécommunication, comprenant des réseaux de télécommunication, les réseaux de télécommunication étant propres à fournir des services, les réseaux appartenant à des opérateurs de réseau mobile, un opérateur de réseau mobile étant un opérateur de réseau mobile privilégié et un terminal mobile propre à s'attacher aux réseaux. L'infrastructure de télécommunication est propre à tenter d'attacher le terminal mobile à un réseau, dit réseau courant et appartenant à un opérateur de réseau mobile courant et à prendre la décision de s'attacher à un autre réseau, dit réseau cible, le réseau cible appartenant à un opérateur de réseau mobile cible distinct de l'opérateur de réseau mobile courant. La prise de décision étant basée sur l'un des deux critères suivants : un premier critère selon lequel l'opérateur de réseau mobile courant est distinct de l'opérateur de réseau mobile privilégié, et un deuxième critère selon lequel la qualité des services fournis par le réseau courant est insuffisante. L'infrastructure de télécommunication est propre à initier l'attachement au réseau cible.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une représentation schématique d'une infrastructure de télécommunication ;
- figure 2, un ordinogramme illustrant un exemple de mise en oeuvre d'un procédé de gestion des accès à l'infrastructure de la figure 1, et
- figure 3, une vue schématique d'un terminal mobile faisant partir de l'installation. Une infrastructure de télécommunication 10 est représentée sur la figure 1.

L'infrastructure de télécommunication 10 comprend des réseaux de télécommunication 12, un terminal mobile 14 et un dispositif de gestion 16.

Selon l'exemple illustré, les réseaux 12 appartiennent à des MNO qui sont tous différents entre eux.

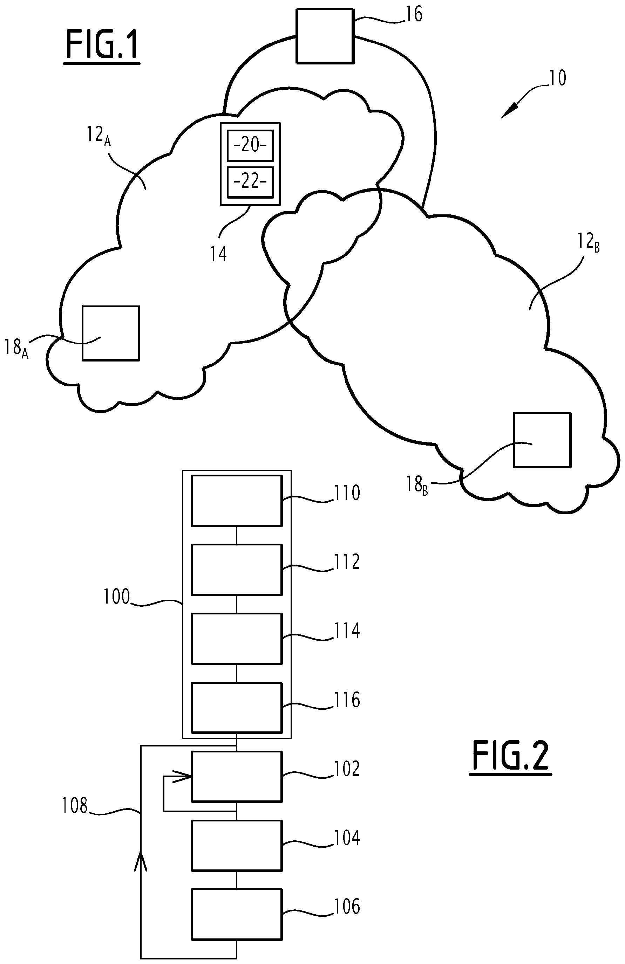

Dans le cas de la figure 1, l'infrastructure 10 comprend un premier réseau 12_{A} et un deuxième réseau 12_{B} appartenant chacun à un MNO respectif parmi deux MNO distincts entre eux, notés MNO_{A} et MNO_{B}.

En variante, l'infrastructure 10 comporte plus de deux réseaux, notamment trois réseaux.

Chaque réseau 12 est, par exemple, propre à mettre en oeuvre des protocoles ou standards de télécommunication du type 2G, 3G, 4G et suivants.

Selon une variante, un des réseaux de télécommunication 12 est un réseau PMR privé reposant sur le standard de télécommunication 4G, et un autre des réseaux de télécommunication 12 est un réseau public national reposant sur les standards 2G, 3G et 4G.

Le MNO_{A} associé au premier réseau 12_{A} est un MNO privilégié par rapport au MNO_{B} associé au deuxième réseau 12_{B}.

Par exemple, l'utilisateur du terminal mobile 14 a négocié un accord de partenariat avec le MNO privilégié selon lequel des avantages spécifiques sont offerts à l'utilisateur par le MNO privilégié.

Un tarif préférentiel appliqué par le MNO privilégié à l'utilisateur est un exemple d'avantage.

Un autre exemple d'avantage est un statut prioritaire accordé par le MNO privilégié aux données transmises par le terminal mobile 14 via le premier réseau 12_{A}, par rapport aux données transmises par d'autres terminaux.

Un autre exemple d'avantage est que le premier réseau 12_{A} offre une couverture ou une qualité de service supérieure au deuxième réseau 12_{B} dans une zone géographique spécifique.

Un autre exemple d'avantage est que le premier réseau 12_{A} est un réseau dédié à certains utilisateurs et peut par exemple fonctionner sur des fréquences dédiées, garantissant ainsi un meilleur accès aux ressources radio qu'un réseau public et une priorisation optimale des services à ces utilisateurs.

Chaque réseau 12 est relié à l'équipement de contrôle d'accès 18 qui est propre à gérer l'authentification et le contrôle d'accès du terminal mobile 14 audit réseau 12 pour la mise en oeuvre de services mobiles.

L'équipement de contrôle d'accès 18, également désigné par le sigle HSS, comprend une base de données.

Le HSS 18 est propre à mémoriser, pour chaque utilisateur muni d'un terminal mobile 14, un registre de réseaux autorisés comprenant un ou plusieurs réseaux 12.

Dans la figure 1, deux HSS 18_{A} et 18_{B} (un par réseau 12) sont représentés.

Dans une variante, un seul HSS 18 est utilisé.

Par « réseau autorisé », il est entendu un réseau 12 auquel le terminal mobile 14 est en mesure de s'attacher. Dit autrement, un réseau 12 autorisé désigne un réseau 12 sur lequel le terminal mobile 14 est susceptible d'être enregistré avec un IMSI.

Chaque terminal mobile 14 est propre à mettre en oeuvre des télécommunications avec les réseaux 12.

Chaque terminal mobile 14 comprend, en outre, un module d'attachement 20, et un module de décision 22 distinct du module d'attachement 20.

Le module d'attachement 20 et le module de décision 22 contiennent chacun des instructions logicielles qui, une fois exécutées par un ou plusieurs processeurs, mettent chacun en oeuvre au moins certaines étapes d'un procédé de gestion des accès à l'infrastructure 10.

Le module d'attachement 20 est propre à déclencher la mise en oeuvre d'une étape d'initiation d'un attachement du terminal mobile 14 à un réseau 12 au moyen d'un numéro d'identification mobile.

De préférence, le module d'attachement 20 est propre à déclencher la mise en oeuvre d'une étape d'initiation d'un attachement du terminal mobile 14 à un réseau 12, le réseau 12 étant spécifié par le module de décision 22 et étant compatible avec le registre de réseaux autorisés mémorisé dans le HSS 18.

Dans le présent mode de réalisation, le numéro d'identification mobile est un IMSI. Dans ce qui suit, le numéro d'identification mobile est désigné par le sigle IMSI.

Par « attachement », il est fait référence aux procédures décrites par les normes de télécommunication et qui consistent à identifier puis à authentifier une station mobile au sein d'un réseau.

Le module de décision 22 est propre à mémoriser un registre de réseaux autorisés.

Dans le présent mode de réalisation, le registre de réseaux autorisés mémorisé dans le module de décision 22 correspond au registre de réseaux autorisés mémorisé dans le ou les HSS 18. En d'autres termes, les réseaux autorisés au niveau du ou des HSS 18 sont les mêmes que les réseaux autorisés au niveau du module de décision 22.

Dans d'autres modes de réalisation, le registre de réseaux autorisés mémorisé dans le module de décision 22 est moins étendu que le registre de réseaux autorisés mémorisé dans le HSS 18, c'est-à-dire qu'il contient moins de réseaux autorisés. Une telle situation résulte, par exemple, d'un paramétrage du module de décision 30 consistant à interdire au terminal mobile 14 l'accès à un ou plusieurs réseaux figurant dans le registre de réseaux autorisés mémorisé dans le HSS 18.

Dans d'autres modes de réalisation, le registre de réseaux autorisés mémorisé dans le module de décision 22 est plus étendu que le registre de réseaux autorisés mémorisé contenus dans le HSS 18, c'est-à-dire qu'il contient plus de réseaux autorisés. Une telle situation résulte, par exemple, d'un paramétrage du module de décision 22 consistant à autoriser le terminal mobile 14 à accéder à des réseaux de type WIFI, qui ne sont pas listés dans le registre de réseaux autorisés mémorisé dans le HSS 18.

Selon un mode de réalisation, un registre des MNOs autorisés est mémorisé dans le module de décision 22. Par exemple, le module de décision 22 est configuré pour considérer tout réseau 12 appartenant à un MNO autorisé comme un réseau 12 autorisé.

Le terminal mobile 14 ayant réussi ou non à s'attacher à un réseau 12, dit réseau courant, le module de décision 22 est propre à mettre en oeuvre une étape de prise de décision.

L'étape de prise de décision, mise en oeuvre par le module de décision 22, consiste à fournir au module d'attachement 20, sur la base d'au moins un critère choisi parmi une liste de critères distincts entre eux, un message de bascule pour le déclenchement de la mise en oeuvre de l'étape d'initiation d'un attachement vers un réseau cible, distinct du réseau courant.

Dans l'étape de prise de décision, le réseau cible est choisi parmi les réseaux du registre de réseaux autorisés mémorisé dans le module de décision 22.

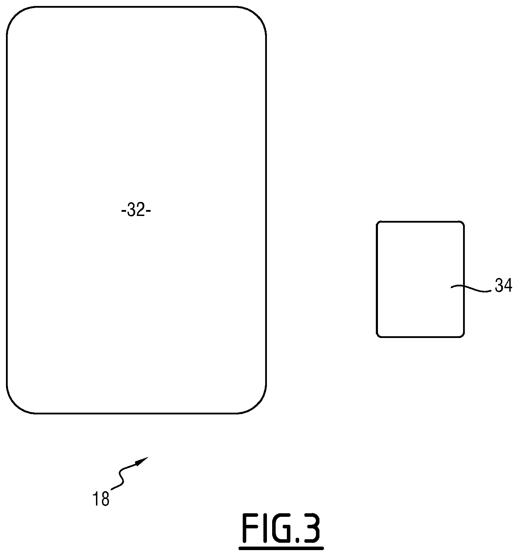

Selon le mode de réalisation décrit notamment en référence à la figure 3, le terminal mobile 14 est un téléphone portable qui comprend un équipement mobile 32 et un dispositif d'attachement 34 propre à être installé dans l'équipement mobile 32.

La définition de l'expression « équipement mobile » correspond à la définition donnée par les normes de télécommunication de type 2G, 3G, 4G et suivantes.

De fait, l'équipement mobile 32 est notamment propre à gérer les ressources radio, l'établissement des connexions ainsi que des services d'itinérance et comprend un émetteur-récepteur pour la liaison radio avec des stations de base 2G, 3G, 4G et suivantes, et éventuellement à d'autres réseaux radio comme le WIFI, un processeur, une mémoire et un système d'exploitation.

Le système d'exploitation de l'équipement mobile 32 est, par exemple, de type Android.

Dans le présent mode de réalisation, le dispositif d'attachement 34est une carte SIM.

Le dispositif d'attachement 34est propre à gérer des réseaux autorisés, c'est-à-dire des réseaux figurant dans le registre de réseaux autorisés mémorisé dans le HSS 18 et/ou dans le module de décision 22.

Le dispositif d'attachement 34 est propre à mémoriser un ou plusieurs réseaux 12. Par exemple, chaque réseau 12 est associé à un identifiant propre à identifier de manière unique l'utilisateur sur le réseau 12 et le dispositif d'attachement est configuré pour mémoriser un ou plusieurs identifiants correspondant aux réseaux 12 accessibles.

Le dispositif d'attachement 34est, notamment, configuré pour tenter de s'attacher au réseau 12 mémorisé. En particulier, le dispositif d'attachement 34est configuré pour tenter de s'attacher au réseau 12 mémorisé lors du démarrage du terminal mobile 14.

Le réseau 12 mémorisé est, par exemple, le dernier réseau 12 auquel le dispositif d'attachement 34s'est attaché.

La carte SIM 34 est une puce qui comprend un microcontrôleur et une mémoire, et qui est propre à mémoriser des informations spécifiques à un utilisateur utilisées pour la mise en oeuvre de l'initiation d'un attachement à un réseau 12.

De façon non limitative, le dispositif d'attachement 34est propre à mémoriser au moins un IMSI et un ensemble d'informations propres à prouver l'authenticité de l'IMSI.

Dans un mode de réalisation, le module de décision 22 est mémorisé dans une mémoire de l'équipement mobile 32et le module d'attachement 20 est mémorisé dans une mémoire du dispositif d'attachement 34. De fait, les instructions logicielles du module de décision 22 sont exécutées par le processeur de l'équipement mobile, et les instructions logicielles du module d'attachement 20 sont exécutées par le microcontrôleur du dispositif d'attachement sur la base d'instructions émises par le module de décision 22.

Dans ce cas, le module de décision 22 est, par exemple, une application mobile propre à être installée sur un équipement mobile avec un système d'exploitation, par exemple de type Android.

Le dispositif de gestion 16 est géré par un opérateur de services.

L'opérateur de services est un opérateur offrant l'accès, pour l'utilisateur du terminal mobile 14, à plusieurs réseaux 12.

L'opérateur de services est, par exemple, un MVNO.

Le dispositif de gestion 16 est propre à administrer le service d'accès à plusieurs réseaux 12 fourni par l'opérateur de services. Le dispositif de gestion 16 permet notamment audit opérateur de services de déclarer et mémoriser les droits d'accès de l'utilisateur final au service ainsi que les identifiants IMSI et les profils de services applicables à chaque réseau 12 utilisé, d'administrer à distance le terminal mobile 14 (notamment la mise à jour du logiciel du module de décision 22 et des droits et paramétrages propres à chaque utilisateur), et de piloter de manière asynchrone le service fourni (notamment le contrôle des droits d'accès au service et la remontée d'événements).

Les échanges entre le dispositif de gestion 16 et le terminal mobile 14 sont réalisés via une connexion de données mobiles au travers des réseaux de télécommunication 12. Il est à noter que le dispositif de gestion 16 et le terminal mobile 14 sont aptes à fonctionner et à être administrés par l'opérateur de services indépendamment des équipements de contrôle d'accès HSS des MNO des réseaux de télécommunication 12 utilisés.

Il est à noter que le module de décision 22 du terminal mobile 14 est apte à fonctionner localement au terminal mobile 14, c'est-à-dire même en l'absence temporaire de connexion avec le dispositif de gestion 16.

Le dispositif de gestion 16 est configuré pour paramétrer le module de décision 22.

Par exemple, le dispositif de gestion 16 est propre à communiquer avec le module de décision 22 et à transmettre au module de décision 22 un message de modification d'au moins un paramètre du module de décision 22.

Selon un mode de mise en oeuvre, le dispositif de gestion 16 est propre à paramétrer les critères mis en oeuvre par le module de décision 22.

Le fonctionnement de l'infrastructure 10 et notamment de la gestion des accès du terminal mobile 14 aux différents réseaux 12_{A} et 12_{B} est maintenant décrit en référence à la figure 2 qui illustre un ordinogramme d'un exemple de mise en oeuvre d'un procédé de gestion des accès à l'infrastructure 10.

Le procédé comporte une étape 100 de tentative d'attachement, une étape 102 de test, une étape 104 de prise de décision et une étape 106 d'initiation de l'attachement.

Lors de l'étape de tentative d'attachement 100, le terminal mobile 14 tente de s'attacher à l'un des réseaux 12, le réseau préféré, qui peut être différent du réseau courant.

Par exemple, le terminal mobile 14 s'attache au réseau préféré lors de l'étape 100 de tentative d'attachement. En variante, dans l'étape de tentative d'attachement 100, le terminal mobile 14 n'a pas réussi à s'attacher au réseau préféré. Une telle situation résulte, par exemple, d'un niveau de signal insuffisant pour que les différentes étapes d'un attachement puissent toutes être mises en oeuvre avec succès.

Le réseau courant est, par exemple, le deuxième réseau 12_{B}, mémorisé dans le dispositif d'attachement car il s'agit du dernier réseau utilisé.

Le réseau préféré est, par exemple, le premier réseau 12_{A}.

L'étape de test 102 est mise en oeuvre suite à l'étape de tentative d'attachement 100.

Lors de l'étape de test 102, un premier et un deuxième critères sont testés par le terminal mobile 14. En particulier, le module de décision 22 vérifie si l'un ou l'autre des critères sont vérifiés.

Selon le premier critère, le MNO du réseau courant est distinct du MNO privilégié.

Selon le deuxième critère, la qualité des services fournis par le réseau courant est insuffisante.

Le critère de « qualité de service » regroupe des critères qui sont de nature quantitative et fonction des différents services mobiles souscrits et utilisés par l'utilisateur, tel que par exemple un débit de data inférieur à 10 kbit/s, ou un dépassement de seuil sur un autre paramètre de qualité de service.

La vérification du deuxième critère comprend, par exemple, la comparaison d'une valeur d'au moins un critère de qualité de service à un seuil prédéfini. En particulier, la qualité de service est considérée comme suffisante ou insuffisante en fonction du résultat de chaque comparaison.

L'étape de test 102 est, par exemple, répétée avec une fréquence prédéfinie. En particulier, l'étape de test 102 est répétée tant qu'aucun critère n'est vérifié, et la fréquence des tests peut éventuellement être adaptée si la situation perdure.

Si au moins un des deux critères est rempli, l'étape de test 102 est suivie de l'étape de prise de décision 104.

En pratique, la fréquence de mise en oeuvre de l'étape de test 102 est un compromis permettant l'obtention d'une bonne qualité. Notamment, une étape de test 102 trop fréquente entraînerait une instabilité de la connexion. Par ailleurs, il convient également de pouvoir garantir un basculement vers le MNO préféré si cela est possible.

Lors de l'étape de prise de décision 104, si l'un des deux critères testés est vérifié, le module de décision 22 décide de s'attacher à un autre réseau 12, dit réseau cible. Le réseau cible est différent du réseau courant. En particulier, le MNO du réseau cible est différent du MNO du réseau courant.

En particulier, si le premier critère est rempli, le réseau cible est le réseau privilégié 12_{A}, c'est-à-dire le réseau 12 appartenant au MNO privilégié.

Si le deuxième critère est rempli, le réseau cible est un réseau 12 présentant une qualité de service éventuellement supérieure à la qualité de service du réseau courant, et suffisante pour l'utilisateur du terminal mobile 14. Ce réseau peut être le réseau préféré ou un autre réseau.

Si seul le critère de qualité de service est rempli, l'étape de test 102 peut, selon une fréquence prédéfinie, décider de désigner comme réseau cible le réseau 12 préféré, afin de tenter un retour périodique sur ledit réseau préféré. Cette fréquence sera plus faible que celle de l'étape de test 102, afin de pouvoir garantir un basculement vers le MNO préféré si cela est possible, sans entraîner une trop grande instabilité de la connexion.

Lors de l'étape de prise de décision 104, un message de bascule pour le déclenchement de la mise en oeuvre de l'étape 106 d'initiation d'un attachement au réseau cible est transmis par le module de décision 22 au module d'attachement 20.

Le message de bascule comporte une information d'identification du réseau cible 12 vers lequel le module d'attachement 20 doit basculer.

Dans l'étape d'initiation d'un attachement 106, le terminal mobile 14 met en oeuvre un attachement au réseau cible 12.

Le réseau courant est, à la suite de l'étape d'initiation d'un attachement 106, le réseau cible.

L'étape de test 102 ainsi que, lorsqu'au moins un critère est vérifié, les étapes de prise de décision 104 et de tentative d'attachement 106 sont ensuite itérées avec, en tant que réseau courant, le réseau cible de l'étape d'initiation d'un attachement 106 qui a été mise en oeuvre lors de l'itération la plus récente. Cela est représenté sur la figure 2 par une flèche 108.

Il est à noter que les différents critères mis en oeuvre par le module de décision 22 sont susceptibles d'être paramétrés par le dispositif de gestion 16.

En particulier, le registre des réseaux 12 autorisés mémorisé dans le module de décision 22, le registre des MNOs autorisés, l'existence et l'identification d'un réseau ou d'un MNO préféré, la fréquence de tentative de retour sur le réseau ou MNO préféré, les critères de qualité du service.

La fréquence avec laquelle l'étape de test 102 est mise en oeuvre est également susceptible d'être paramétrée par le dispositif de gestion 16.

Le procédé permet à un terminal mobile 14 de s'attacher efficacement à l'un parmi les réseaux 12 disponibles, et donc d'assurer une qualité de service suffisante à l'utilisateur, tout en privilégiant un réseau 12 parmi l'ensemble des réseaux 12 disponibles. Le procédé permet donc de prendre en compte des paramètres qui ne sont pas mesurables directement par le terminal mobile 14 pour décider du réseau 12 auquel le terminal mobile 14 va s'attacher.

Les paramètres du procédé étant paramétrables par l'opérateur de services via le dispositif de gestion 16, le procédé est adaptable à des changements dans les caractéristiques des réseaux disponibles, notamment en cas d'évolutions contractuelles entre l'opérateur de services et les MNOs, ou en cas d'évolutions des besoins techniques de l'utilisateur, sans intervention de l'utilisateur. Les changements de paramètres sont donc transparents pour l'utilisateur.

La répétition de l'étape de test 102 permet au procédé de s'adapter aux évolutions de la disponibilité des réseaux 12, puisque les critères de choix du réseau 12 auquel le terminal mobile 14 s'attache sont réévalués périodiquement.

Selon un mode de réalisation, l'étape de test 102 ou l'étape d'initiation d'un attachement 106 comporte une étape d'avertissement de l'utilisateur. Lors de l'étape d'avertissement, le terminal mobile 14 avertit l'utilisateur de la nature du réseau 12 auquel le terminal mobile 14 est attaché. En d'autres termes, le terminal mobile 14 avertit l'utilisateur de la nature du réseau courant.

Par exemple, le terminal mobile 14 indique à l'utilisateur si le réseau courant est le réseau privilégié 12_{A} ou un autre réseau 12. En particulier, le terminal mobile 14 affiche un message ou une icône dont le format varie selon si le réseau courant est ou n'est pas le réseau privilégié 12_{A}.

Ainsi, l'utilisateur est averti qu'il bénéficie ou non des avantages fournis par le réseau 12_{A} privilégié, et est susceptible de choisir en conséquence de modifier manuellement l'attachement du terminal mobile 14 au réseau 12.

Selon un mode de réalisation, l'étape 100 de tentative d'attachement comporte une étape 110 de démarrage, une étape 112 de lecture, une étape 114 de transmission et une étape 116 d'essai d'attachement.

Lors de l'étape 110 de démarrage du terminal mobile 14, le terminal mobile 14 est démarré.

L'étape de démarrage 110 comprend, par exemple, une étape d'information à l'utilisateur de l'existence d'un MNO privilégié MNO_{A}. L'information prend, notamment, la forme d'un message ou d'une icône affiché sur le terminal mobile 14 et signalant à l'utilisateur que les réseaux 12 du MNO privilégié MNO_{A} offrent des avantages particuliers.

Ainsi, l'utilisateur est susceptible de choisir de sa propre initiative le réseau privilégié 12_{A} même lorsque le terminal 14 est attaché à un autre réseau 12. Le procédé offre donc la possibilité à l'utilisateur d'attacher le terminal 14 au réseau privilégié 12_{A} sans attendre la prochaine itération de l'étape de test 102. La disponibilité, pour l'utilisateur, des avantages offerts par le réseau privilégié 12_{A} est donc améliorée.

Au cours de l'étape de lecture 112, le réseau 12 mémorisé dans le dispositif d'attachement est lu par le module de décision 22.

En particulier, le module de décision 22 consulte dans la mémoire du dispositif d'attachement l'identifiant du réseau 12 mémorisé.

Le réseau 12 mémorisé est, notamment, le dernier réseau 12 auquel le terminal mobile 14 s'est attaché avant d'avoir été éteint ou redémarré.

Au cours de l'étape 114 de transmission, si le réseau 12 mémorisé n'est pas le réseau du MNO privilégié MNO_{A}, le module de décision 22 prend la décision d'attacher le terminal mobile 14 au réseau privilégié 12_{A}. Pour cela, le module de décision 22 transmet un message de bascule au module d'attachement 20. Le message de bascule contient alors un identifiant du réseau privilégié 12_{A}.

En d'autres termes, l'étape 114 de transmission est identique à l'étape 104 de prise de décision, le réseau cible étant le réseau privilégié 12_{A}.

Lors de l'étape d'essai d'attachement 116, le terminal mobile 14 tente de s'attacher au réseau privilégié 12_{A}.

Ainsi, au lieu de s'attacher, comme c'est le cas en général, au réseau 12 mémorisé lors du démarrage du terminal mobile 14, le terminal mobile 14 s'attache, lorsque c'est possible, au réseau privilégié 12_{A}, même lorsque le dernier réseau 12 auquel le terminal mobile 14 était connecté est distinct du réseau privilégié 12_{A}. L'utilisation du réseau privilégié 12_{A} est donc rendue plus systématique, et l'utilisateur bénéficie donc des avantages du réseau privilégié 12_{A} dès le démarrage du terminal mobile 14.

En particulier, le procédé peut être mis en oeuvre par un système et un produit programme d'ordinateur. L'interaction du produit programme d'ordinateur avec le système permet de mettre en oeuvre le procédé de gestion.

Le système est un ordinateur.

Plus généralement, le système est un calculateur électronique propre à manipuler et/ou transformer des données représentées comme des quantités électroniques ou physiques dans des registres du système et/ou des mémoires en d'autres données similaires correspondant à des données physiques dans des mémoires, des registres ou d'autres types de dispositifs d'affichage, de transmission ou de mémorisation.

Le système comporte un processeur comprenant une unité de traitement de données, des mémoires et un lecteur de support d'informations. Le système peut également comprendre un clavier et une unité d'affichage.

Le produit programme d'ordinateur comporte un support lisible d'informations.

Un support lisible d'informations est un support lisible par le système, usuellement par l'unité de traitement de données. Le support lisible d'informations est un médium adapté à mémoriser des instructions électroniques et capables d'être couplé à un bus d'un système informatique.

A titre d'exemple, le support lisible d'informations est une disquette ou disque souple (de la dénomination anglaise de « *floppy disk* »), un disque optique, un CD-ROM, un disque magnéto-optique, une mémoire ROM, une mémoire RAM, une mémoire EPROM, une mémoire EEPROM, une carte magnétique ou une carte optique.

Sur le support lisible d'informations est mémorisé un programme d'ordinateur comprenant des instructions de programme.

Le programme d'ordinateur est chargeable sur l'unité de traitement de données et est adapté pour entraîner la mise en oeuvre d'un procédé de gestion.

### LEXIQUE

HSS : sigle de « Home Subscriber Server » pour « serveur central d'abonnés »
IMSI : sigle de « International Mobile Subscriber Identity » pour « identité internationale d'abonné mobile », également appelé numéro d'identification mobile
MNO : sigle de « Mobile Network Operator » pour « opérateur de réseau mobile », qui désigne une compagnie qui possède son propre réseau radio de télécommunication mobile, permettant à un MVNO de proposer des services mobiles sans déployer de coeur de réseau mobile complet ni d'interconnexion directe avec un ou plusieurs MNO.
MVNE : sigle de « Mobile Virtual Network Enabler » pour « fournisseur de services de réseau mobile virtuel », qui désigne une compagnie offrant des solutions techniques permettant à un MVNO de proposer des services mobiles sans déployer de coeur de réseau mobile complet ni d'interconnexion directe avec un ou plusieurs MNO.
MVNO : sigle de « Mobile Virtual Network Operator » pour « opérateur de téléphonie mobile virtuel », également appelé opérateur de services mobiles, qui désigne une compagnie de télécommunication qui, ne possédant pas de réseau d'accès radio en propre, loue les réseaux d'un ou plusieurs MVNE et/ou MNO pour pouvoir proposer des services mobiles.
PMR : sigle de « Private Mobile Radiocommunications » ou « Professional Mobile Radiocommunications » pour « réseau mobile privé de radiocommunication »
SIM : sigle de « Subscriber Identity Module » pour « module d'identification d'abonné »
2G : système de télécommunication de deuxième génération.
UMTS (ou 3G) : sigle de « Universal Mobile Télécommunications System » pour « système de télécommunication mobile universel »
4G : système de télécommunication de quatrième génération. La LTE (signe de « Long Term Evolution ») est un exemple de système de télécommunication de quatrième génération.

## Revendications

1. Procédé de gestion des accès à une infrastructure de télécommunication (10), l'infrastructure de télécommunication (10) comprenant :
- des réseaux de télécommunication (12_{A}, 12_{B}), les réseaux de télécommunication (12_{A}, 12_{B}) étant propres à fournir des services, les réseaux (12_{A}, 12_{B}) appartenant à des opérateurs de réseau mobile, un des opérateurs de réseau mobile étant un opérateur de réseau mobile privilégié, et
- un terminal mobile (14) propre à s'attacher aux réseaux (12_{A}, 12_{B}),
le procédé comportant les étapes de :
- tentative d'attachement (100) du terminal mobile (14) à un réseau (12_{A}, 12_{B}), dit réseau courant et appartenant à un opérateur de réseau mobile courant,
- prise de décision (104) de s'attacher à un autre réseau (12_{A}, 12_{B}), dit réseau cible, le réseau cible appartenant à un opérateur de réseau mobile cible distinct de l'opérateur de réseau mobile courant, la prise de décision étant basée sur au moins les deux critères suivants :
- un premier critère selon lequel l'opérateur de réseau mobile courant est distinct de l'opérateur de réseau mobile privilégié, et
- un deuxième critère selon lequel la qualité des services fournis par le réseau courant est insuffisante, et
- initiation de l'attachement (106) au réseau cible.

2. Procédé de gestion selon la revendication 1, dans lequel le terminal mobile (14) comporte un dispositif d'attachement contenant un module d'attachement (20), l'étape de prise de décision (104) étant mise en oeuvre par un module de décision (22) distinct du module d'attachement (20) et la mise en oeuvre de l'étape d'initiation d'un attachement (106) étant déclenchée par le module d'attachement (20) sur commande du module de décision (22), le module de décision (22) étant mémorisé dans une mémoire du terminal mobile (14) et le module d'attachement (20) étant mémorisé dans une mémoire du dispositif d'attachement.

3. Procédé de gestion selon la revendication 1 ou 2, dans lequel l'infrastructure de télécommunication (10) comporte un dispositif de gestion (16) et les critères mis en oeuvre par le module de décision (22) sont paramétrables par le dispositif de gestion (16), le dispositif de gestion (16) communiquant avec le module de décision (22), la communication pouvant être asynchrone, le dispositif de gestion (16) et le module de décision (22) étant administrés par l'opérateur de services et fonctionnant indépendamment des opérateurs de réseau de télécommunication.

4. Procédé de gestion selon l'une quelconque des revendications 1 à 3, dans lequel le dispositif d'attachement mémorise un réseau (12_{A}, 12_{B}), le procédé comporte, en outre, les étapes de :
- démarrage (110) du terminal mobile (14),
- lecture (102) du réseau (12_{A}, 12_{B}) mémorisé dans le dispositif d'attachement,
- si le réseau mémorisé (12_{A}, 12_{B}) est distinct de celui de l'opérateur de réseau mobile privilégié, transmission (114), depuis le module de décision (22) vers le module d'attachement (20), d'un message de bascule comprenant une information d'identification du réseau cible (12_{A}, 12_{B}), le module d'attachement (20) étant propre à déclencher la mise en oeuvre de l'initiation d'un attachement (106) du terminal mobile (14) au réseau cible (12_{A}, 12_{B}) à la réception dudit message de bascule, et
- tentative d'attachement (116) au réseau privilégié.

5. Procédé de gestion selon l'une quelconque des revendications 1 à 4, dans lequel le procédé comporte une étape de test (102) du premier critère et du deuxième critère à une fréquence prédéfinie.

6. Procédé de gestion selon l'une quelconque des revendications 1 à 5, dans lequel le procédé comporte, en outre, une étape d'information à l'utilisateur du terminal mobile (14) de l'existence d'un opérateur de réseau mobile privilégié, et une étape d'avertissement à l'utilisateur du terminal mobile (14) de l'utilisation de l'opérateur de réseau mobile privilégié ou d'un autre réseau mobile.

7. Produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en oeuvre d'un procédé selon l'une quelconque des revendications 1 à 6 lorsque le programme d'ordinateur est mis en oeuvre sur l'unité de traitement des données.

8. Support lisible d'informations mémorisant un programme d'ordinateur comprenant des instructions de programme, le programme d'ordinateur étant chargeable sur une unité de traitement de données et adapté pour entraîner la mise en oeuvre d'un procédé selon l'une quelconque des revendications 1 à 6 lorsque le programme d'ordinateur est mis en oeuvre sur l'unité de traitement des données.

9. Infrastructure de télécommunication, comprenant :
- des réseaux de télécommunication (12_{A}, 12_{B}), les réseaux de télécommunication (12_{A}, 12_{B}) étant propres à fournir des services, les réseaux (12_{A}, 12_{B}) appartenant à des opérateurs de réseau mobile, un opérateur de réseau mobile étant un opérateur de réseau mobile privilégié, et
- un terminal mobile (14) propre à s'attacher aux réseaux (12_{A}, 12_{B}), l'infrastructure de télécommunication (10) étant propre à :
- tenter d'attacher le terminal mobile (14) à un réseau (12_{A}, 12_{B}), dit réseau courant et appartenant à un opérateur de réseau mobile courant,
- prendre la décision de s'attacher à un autre réseau (12_{A}, 12_{B}), dit réseau cible, le réseau cible appartenant à un opérateur de réseau mobile cible distinct de l'opérateur de réseau mobile courant, la prise de décision étant basée sur au moins les deux critères suivants :
- un premier critère selon lequel l'opérateur de réseau mobile courant est distinct de l'opérateur de réseau mobile privilégié, et
- un deuxième critère selon lequel la qualité des services fournis par le réseau courant est insuffisante, et
- initier l'attachement (106) au réseau cible.
